Europäisches Patentamt

European Patent Office

Office européen des brevets

(19)

(11) EP 0 862 057 A1

(12) EUROPÄISCHE PATENTANMELDUNG

(43) Veröffentlichungstag:
02.09.1998 Patentblatt 1998/36

(51) Int Cl.⁶: G01N 30/62

(21) Anmeldenummer: 98250070.4

(22) Anmeldetag: 26.02.1998

(84) Benannte Vertragsstaaten:
AT BE CH DE DK ES FI FR GB GR IE IT LI LU MC NL PT SE
Benannte Erstreckungsstaaten:
AL LT LV MK RO SI

(30) Priorität: 26.02.1997 DE 19709831

(71) Anmelder: Agon Pharma GmbH
73240 Wendlingen (DE)

(72) Erfinder: Wixford, Annette, Dr.
73240 Wendlingen (DE)

(74) Vertreter: Patentanwälte Wenzel & Kalkoff
Grubesallee 26
22143 Hamburg (DE)

(54) Analyse von Inhaltsstoffen des Johanniskrauts

(57)    Zur Bestimmung eines oder mehrerer Inhaltsstoffe von Johanniskraut (Hypericum perforatum L.) wie insbesondere Hypericin, Pseudohypericin, Hyperforin oder Flavonoiden, wird ein HPLC-Verfahren mit einem internen Standard angewandt. Als interner Standard wird 1-Amino-4-(1-octylamino)anthrachinon eingesetzt. Dazu wird das Johanniskraut in Form der Droge, als Drogenzubereitung oder als daraus hergestelltes Fertigarzneimittel, insbesondere als Lösung in Methanol und einer Mischung aus Methanol und Ethylacetat eingesetzt. Je nach zu bestimmender Substanz wird unter Lichtausschluß oder mit Belichtung gearbeitet. Auf diese Weise ist neben einer qualitativen auch eine quantitative Bestimmung der Inhaltsstoffe des Johanniskrauts möglich.

Abb. 7: Kalibrierlösung

EP 0 862 057 A1

**Beschreibung**

Die Erfindung betrifft ein Verfahren zur Bestimmung eines oder mehrerer Inhaltsstoffe von Johanniskraut (Hypericum perforatum L.).

Wie aus dem Römpp Chemie Lexikon, 9. Auflage, S. 2099 (1991) hervorgeht, wird Johanniskraut seit alters her gegen Gallen-, Blasen-, Leber- und Magenbeschwerden, Kopfweh, Gicht, Rheuma, als mildes Sedativum und zur Wundheilung arzneilich gebraucht.

Der Anteil der verschiedenen Inhaltsstoffe im Johanniskraut kann, da es sich um einen Naturstoff handelt, variieren. Für die Verwendung als Arzneimittel ist jedoch eine genaue Kenntnis der Inhaltsstoffmengen erforderlich. Dabei interessiert besonders der Gehalt an den verschiedenen Hypericin-Verbindungen, und hier insbesondere der Gehalt an Hypericin und Pseudohypericin wie auch der Gehalt an Protohypericin, Protopseudohypericin, Cyclopseudohypericin, Isohypericin und weiteren Naphtodianthronen und Anthrachinonen/Xanthonderivaten. Zunehmende Bedeutung gewinnt auch die Bestimmung des Gehalts an Hyperforin, da sich inzwischen die Anzeichen verstärken, daß diese Substanz eine der möglichen wirksamkeitsbestimmenden Substanzen des Johanniskrauts ist. Weiterhin interessiert auch der Gehalt an verschiedenen Flavonoiden wie Rutosid, Hyperosid, Isoquercitrin, Quercitrin oder Quercetin.

Im DAC (Deutscher Arzneimittel Code 1986 (3. Ergänzung 1991)) ist zur Bestimmung der Inhaltsstoffe des Johanniskrauts ein Verfahren mittels UV-Messung beschrieben. Bei diesem Verfahren erfolgt die Quantifizierung durch eine UV-spektroskopische Absorptionsmessung des Hypericins bei 589,3 nm, mit der die Gesamtheit der im Gemisch vorliegenden hypericinartigen Verbindungen unspezifisch bestimmt wird. Aus dem Meßwert für die Gesamtabsporption ergibt sich nach DAC der Gehalt an Naphthodianthronen (Gesamthypericin) berechnet als Hypericin nach $g = A \times 125/(A^1 \times m)$, wobei $A$ die gemessene Absorption, $A^1$ die spezifische Absorption (= 870), $m$ die Einwaage der Droge in Gramm und $g$ das Gesamthypericin in Gramm pro 100 g Johanniskraut angibt.

Nachteilig an diesem Verfahren ist, daß es nur die unspezifische Bestimmung der Mischung der hypericinähnlichen Verbindungen zuläßt, während man den Gehalt der einzelnen Hypericin-Komponenten nicht ermitteln kann. Ferner ist eine Bestimmung des Hyperforins oder der Flavonoid-Inhaltsstoffe des Johanniskrauts auf diese Weise nicht möglich.

Krämer und Wiartalla schlagen in ihrem Artikel "Bestimmung von Naphthodianthronen (Gesamthypericin) in Johanniskraut (Hypericum perforatum L.)" (Pharm. Ztg. Wiss., Nr. 5, 1992, S. 202 ff.) eine HPLC-Bestimmung (High Pressure Liquid Chromatography) des Hypericins unter Verwendung eines externen Standards vor. Diese Methode ermöglicht eine Bestimmung des Gesamthypericins zum einen, aber auch eine Bestimmung der einzelnen Hypericin-Komponenten zum anderen. Dabei werden unter gleichen Bedingungen von einer Referenzlösung sowie von der Probenlösung Chromatogramme aufgenommen. Die Menge jeder einzelnen Hypericinkomponente bestimmt sich zu $G_i = F_i \times m_f \times 100/(F_f \times m_i)$, wobei $m_f$ und $F_f$ die Konzentration des Hypericins in g/100 ml bzw. die Fläche des Hypericinpeaks im Chromatogramm für die Referenzlösung sind, $F_i$ die Einzelpeakfläche im Probenchromatogramm, $m_i$ die Einwaage der Droge in g und $G_i$ der Gehalt der Komponente in g Hypericin/100g Johanniskraut ist. Der Gesamthypericingehalt ergibt sich als Summe der Gehalte der Einzelkomponenten.

Bei diesem Verfahren läßt sich zwar der Gehalt für die jeweiligen Einzelkomponenten wie auch der Gesamtgehalt bestimmen jedoch weist das Verfahren andere gravierende Nachteile auf. So ist sehr genaues Arbeiten erforderlich, da sich beispielsweise schon geringe Unterschiede in den Probenvolumina stark auf das Meßergebnis auswirken. Gerade bei Routineanalyse wie der im vorliegenden Fall ist es wünschenswert, die Anforderungen an die Genauigkeit beim Arbeiten zu vermindern.

Weiter muß der Hypericingehalt der Referenzlösung ungefähr dem der Probe entsprechen, da ansonsten die oben angegebene Formel ihre Gültigkeit verliert. Da die Bedingungen, unter denen die Messungen für Probe und Referenz durchgeführt werden, möglichst identisch sein müssen, ist bei jeder Schwankung in den Bedingungen, wie z.B. der Temperatur, eine neue Referenzmessung erforderlich. Aufgrund des Erfordernisses der wiederholten Referenzmessung wird ein häufiges Referenzprobenansetzen erforderlich, da die Haltbarkeit der Hypericin-Referenzprobe begrenzt ist. Hypericin ist jedoch eine teure Substanz, so daß diese Art der Analyse schnell hohe Kosten verursacht.

Auch bei dieser Methode ist weder eine Bestimmung des Hyperforins noch eine Bestimmung der Flavonoide möglich. Selbst wenn das Verfahren analog auf Hyperforin angewandt werden könnte, käme hinzu, daß Hyperforin in isolierter Substanz extrem instabil ist, so daß die Verwendung isolierten Hyperforins so weit wie möglich vermieden werden sollte.

Aufgabe der vorliegenden Erfindung ist es daher, ein Verfahren zur Bestimmung eines oder mehrerer Inhaltsstoffe von Johanniskraut (Hypericum perforatum L.) mittels HPLC zu Verfügung zu stellen, das durch Verringerung der Verwendung von Hypericin als Referenzsubstanz geringere Kosten verursacht sowie auch bei leichten Ungenauigkeiten in der Probenabmessung trotzdem exakte Ergebnisse liefert, und schließlich die Bestimmung des Gehalts an Hyperforin sowie an Flavonoiden ermöglicht.

Die Aufgabe wird entsprechend der vorliegenden Erfindung dadurch gelöst, die HPLC-Analyse unter Verwendung von 1-Amino-4-(1-octylamino) anthrachinon als internem Standard durchgeführt wird.

Durch die Verwendung eines internen Standards wird eine weitgehende Volumenunabhängigkeit erreicht, so daß kleine Ungenauigkeiten in der Probenabmessung keine Auswirkungen auf das Analysenergebnis haben. Auch ist bei einer Analytik mit internem Standard lediglich eine einmalige Bestimmung eines Referenzkorrekturfaktors erforderlich, der sich erst dann ändert, wenn erhebliche Eingriffe in das Analysesystem, wie beispielsweise das Auswechseln der Meßlampe, vorgenommen werden. Mit anderen Worten sind bei geringen Änderungen in den Analysebedingungen keine neuen Referenzmessungen erforderlich.

Um eine Analytik mit internem Standard betreiben zu können, ist eine für die zu bestimmende Probe geeignete Substanz erforderlich. So muß die als Standard zu verwendende Substanz ein geeignetes UV-Spektrum sowie eine Retentionszeit aufweisen, die von denen der einzelnen Hypericin- sowie den anderen zu bestimmenden Inhaltsstoffe deutlich verschieden ist, damit der Peak der Referenzsubstanz im HPLC-Chromato-gramm nicht die der Inhaltsstoffe des Johanniskrauts überlagert.

Überraschenderweise wurde gefunden, daß 1-Amino-4-(1-octyl-amino)anthrachinon, das bisher nur in seiner Eigenschaft als Farbstoff bekannt war, die erforderlichen Eigenschaften aufweist, um als interner Standard in der Bestimmung der Inhaltsstoffe des Johanniskrauts zu fungieren.

Die Retentionszeit des 1-Amino-4-(1-octylamino)anthrachinons liegt zwischen der des Hypericins und der des Pseudohypericins, so daß der zugehörige Peak im Chromatogramm eindeutig definiert ist und ohne Schwierigkeiten ausgewertet werden kann. Außerdem belaufen sich die Kosten für das 1-Amino-4-(1-octylamino)anthrachinon auf einen Bruchteil der gleichen Menge an Hypericin, so daß eine deutliche Kostensenkung erreicht werden kann. Gleiches gilt auch für das Hyperforin, das durch seine extreme Instabilität ebenfalls sehr teuer und nur sehr schwer zu erhalten ist. Diese Kosten können durch den verringerten Bedarf an Hyperforin selbst gesenkt werden, da eben nur eine Kalibrierung mit Hyperforin erforderlich ist, während für alle weiteren Messungen auf den Standard, also das 1-Amino-4-(1-octylamino) anthrachinon zurückgegriffen wird.

1-Amino-4-(1-octylamino)anthrachinon war bisher im Handel nicht käuflich erhältlich. Die Herstellung erfolgt nach einer Vorschrift von Yoshida et al. (Bull. Chem. Soc. Jpn., 53, 2552-2554 (1980)). Dabei wird 1-Aminoanthrachinon in Gegenwart von Kobalt(II)chlorid mit 1-Octylamin umgesetzt. Das Verfahren liefert das 1-Amino-4-(1-octylamino)anthrachinon in einer Ausbeute von 76 %. Zwei Darstellungsbeispiele sind weiter unten beschrieben.

Bei einer Analytik mit internem Standard wird den zu bestimmenden Proben jeweils eine definierte Menge Standardsubstanz zugesetzt. Die Menge zu bestimmender Substanz ergibt sich dann nach $m_f = K \times m_{St} \times F_f/F_{St}$, wobei $m_f$ die Menge der zu bestimmenden Substanz sowie $m_{St}$ die Menge an zugesetztem Standard ist, $F_f$ und $F_{st}$ die Peakflächen von zu bestimmender Substanz bzw. zugesetztem Standard sind und K für einen Referenzkorrekturfaktor steht, der einmalig ermittelt werden muß und dann so lange als konstant angesehen werden kann, bis größere Veränderungen an der Chromatographieeinrichtung, wie beispielsweise das Auswechseln der Lampe oder der Säule, vorgenommen werden. Die Bestimmung des Referenzkorrekturfaktors erfolgt, indem zunächst eine bekannte Menge zu bestimmender Substanz, also beispielsweise Hypericin, und eine bekannte Menge 1-Amino-4-(1-octylamino)anthrachinon verwendet werden. Der Referenzkorrekturfaktor ergibt sich dann durch einfaches Umstellen der oben angegebenen Gleichung zu

$$K = m_f / (m_{St} \times F_f/F_{St}).$$

Bei dem erfindungsgemäßen Verfahren ist also nur einmal die Verwendung des teuren Hypericins und, wenn das Gesamthypericin bestimmt werden soll, des Pseudohypericins und des Hypericins, erforderlich, während alle weiteren Messungen mit dem erheblich preiswerteren 1-Amino-4-(1-octylamino) anthrachinon durchgeführt werden können. Entsprechendes gilt für das ebenfalls teure und zusätzlich extrem instabile Hyperforin.

Bisher, d.h. bei der Methode unter Verwendung eines externen Standards, wurde bei der Bestimmung von Gesamthypericin Pseudohypericin als Hypericin berechnet, da Pseudohypericin noch um ein Vielfaches teurer als Hypericin und nur schwer erhältlich ist. Bei der Festlegung eines Referenzkorrekturfaktors für die Methode mit internem Standard hingegen lohnt sich auch eine Kalibrierung mit Pseudohypericin, da diese längere Zeit Bestand hat. Es ist somit eine genauere Bestimmung des Gesamthypericins möglich.

Des weiteren ist bei dem erfindungsgemäßen Verfahren die Bestimmung des Gehaltes an jeweiligem Inhaltsstoff mit höherer Genauigkeit möglich, da der Variationskoeffizient, der bei der HPLC-Bestimmung mit externem Standard je nach Galenik zwischen 1,5 und 3,5 % liegt, bei dem erfindungsgemäßen Verfahren lediglich 1,4 % beträgt.

Das Johanniskraut liegt üblicherweise in Form der Droge oder als Drogenzubereitung (z.B. Extrakt) oder als daraus hergestelltes Fertigarzneimittel vor. Um eine für die HPLC-Analyse geeignete Probe zu erhalten, wird der jeweilige Stoff im entsprechenden Lösungsmittel, beispielsweise Methanol oder Methanol/Ethylacetat gelöst. Dabei ist im Falle der Hyperforin-Bestimmung darauf zu achten, daß die Probenaufbereitung unter Lichtausschluß erfolgt.

Als Eluent für die HPLC-Analyse eignen sich besonders Mischungen von Acetonitril und Phosphorsäure bzw. Mischungen von Methanol und Ethylacetat mit einem pH-Wert unter 3, was im letzteren Fall vorteilhafterweise durch Zugabe von Essigsäure oder Phosphorsäure (letztere bevorzugt 1-5 %ig) oder durch Zugabe eines Phosphatpuffers, beispielsweise in Form einer NaH$_2$PO$_4$-Lösung, erfolgen kann. Das Verhältnis Methanol/Ethylacetat beträgt vorteilhafterweise zwischen 4:1 und 6:1, wobei ein Verhältnis von 5:1 eine besonders gute Trennung ermöglicht.

Je nach dem, welche Substanz bestimmt werden soll, wird die zu bestimmende Probe vor der Analyse vorteilhafterweise einer Belichtung ausgesetzt. Durch die Belichtung werden die instabilen Protoverbindungen (Protohypericin und Protopseudohypericin) in Hypericin bzw. Pseudohypericin umgewandelt, so daß eine einfachere und eindeutigere Bestimmung des Gesamthypericingehalts möglich wird. Besonders bevorzugte Belichtungsbedingungen sind eine Belichtung über zwei Stunden bei 2000 Lux. Zur Bestimmung des Hyperforins hingegen muß unter Lichtausschluß gearbeitet werden. Die Probe kann also zunächst unbelichtet analysiert werden, um so den Gehalt an Hyperforin zu bestimmen. Im Anschluß wird die verbleibende Probe belichtet und der Gehalt an Hyericin/Gesamthypericin bestimmt.

Als Säule wird bevorzugt eine RP18-Säule, 5µm, 250x3 mm verwendet.

Ein bevorzugter Temperaturbereich liegt zwischen 15 und 40°C, wobei zur Bestimmung des Hypericins eine Temperatur im Bereich von 30 bis 35°C, zur Bestimmung des Hyperforins eine Temperatur von ca. 20°C besonders vorteilhaft ist.

## Ausführungsbeispiele

### 1. Herstellung des 1-Amino-4-(1-octylamino)anthrachinon

a) Erstes Beispiel

2,009 g 1-Aminoanthrachinon (9mmol) und 1,1686 g CoCl$_2$ (wasserfrei, 9 mmol) werden in einem 50ml-Rundkolben eingewogen und mit 30 ml 1-Octylamin (0,1815 mol) versetzt. Es wird 18h bei Raumtemperatur unter Luftzutritt kräftig gerührt (Kondensationsrohr oder Rückflußkühler ohne Kühlwasser). Nach beendeter Reaktion hat die Lösung eine tief dunkelblau-grüne Farbe.

Die so erhaltene Lösung gibt man unter Rühren langsam in ca. 300 ml 4 %ige HCl (eisgekühlt), rührt noch etwa 15 min und läßt dann etwa 30 min. stehen. Anschließend wird über eine Glasfritte (Por 3) abgesaugt und der Rückstand noch 4-5 mal mit 4 %iger HCl nachgewaschen, bis die Reste vom Alkylamin und der Ausgangsverbindung abgetrennt sind (das Filtrat sollte nicht mehr rötlich gefärbt sein). Danach wird mit Wasser neutral gewaschen und mit ca. 50 ml MeOH/Wasser 1:1 möglicherweise entstandenes Zersetzungsprodukt (1,4-Diaminoanthrachinon) ausgewaschen (eventuell etwas mehr; ist Zersetzungsprodukt vorhanden, ist das Filtrat pink-lila gefärbt). Nach dem Trockenziehen kann zur Kontrolle ein DC gemacht werden; Kieselgel/Hexan:Essigester 3:1 mit 1-Aminoanthrachinon und 1,4-Diaminoanthrachinon als Vergleichssubstanzen.

Ergebniskonsequenzen:

1) Ist nur ein reinblauer Spot mit Rf ca. 0,5 zu sehen, kann getrocknet werden.
2) Ist ein orange-roter Spot direkt unter dem Alkylanthrachinon zu erkennen (1-Aminoanthrachinon), muß weiter mit 4 %iger HCl gewaschen werden.
3) Ist der pinkfarbene Spot von 1,4-Diaminoanthrachinon zu erkennen, muß weiter mit MeOH:Wasser 1:1 gewaschen werden, bis das Filtrat nicht mehr pinkfarben ist.
4) Ist ein grünlicher Fleck am Auftragungsort sitzengeblieben, ist der Chelat-Komplex nicht vollständig zerstört. Dies ist auch daran zu erkennen, daß die Lösung in Methanol nicht rein tintenblau aussieht, sondern noch einen Grünstich hat. Ist dies der Fall, so muß auf jeden Fall das Rohprodukt in Methanol aufgenommen werden und unter Rühren vorsichtig so lange 4 %ige HCl zugegeben werden, bis die Lösung klar blau und kein Grünstich mehr zu erkennen ist. Diese Lösung wird unter leichtem Vakuum über einer Fritte mit Kieselgel filtriert (Filtrat muß tintenblau sein). Dann engt man am Rotationsverdampfer (Wasserbad nicht wärmer als 40°C) auf etwa ein Drittel bis ein Viertel ein, gibt etwa die gleiche Menge Wasser zu und läßt auskristallisieren (Kühlschrank). Nach dem Absaugen wird mit Wasser und mit MeOH:Wasser 1:1 gewaschen, bis das Filtrat nicht mehr pink gefärbt ist (s.o.).

Dann wird an der Luft und anschließend im Vakuum getrocknet.

Ansatz:      2,009 g 1-Amino-4- (1-octylamino)
             anthrachinon=9 mmol 1,1686 g CoCl$_2$ (wasserfrei) = 9 mmol
             30 ml 1-Octylamin = 0,1815 mol

Ausbeute:    theoretisch 3,15 g
             gefunden ca. 2,4 g = 76%

b) Zweites Beispiel

10,045 g 1-Aminoanthrachinon und 10,71g $CoCl_2$ werden in einen 500 ml-Rundkolben eingewogen und mit 100 ml DMF versetzt. Man läßt etwa 5 min. rühren und gibt dann 50 ml Octylamin zu. Nach weiteren 12h Rühren kontrolliert man mit DC, ob noch Ausgangsverbindung vorhanden ist; ist nur noch eine Spur 1-Aminoanthrachinon vorhanden, gibt man 100 ml Hexan:Ethylacetat (2:3) und 100 ml 10 %ige Essigsäure zu und läßt 5 min. rühren. In einem 1 1-Scheidetrichter legt man 400 ml 10 %ige Essigsäure vor, gibt die Reaktionsmischung zu und spült den Kolben mit insgesamt 200 ml Hexan:Ethylacetat (2:3) aus. Man schüttelt gut aus, trennt die Phasen und extrahiert noch dreimal mit je 250 ml 10 %iger Essigsäure. Die wäßrige Phase sollte nur noch hellbraun-rot gefärbt sein. Dann wird noch zweimal mit je 200 ml 2 %iger HCl extrahiert und in der Folge die wäßrige Phase sehr gut abgetrennt.

In einer Glasfritte (Por 3, Durchmesser ca. 10 cm) legt man Kieselgel vor (Fritte etwa 2/3 gefüllt) und läßt den Inhalt des Scheidetrichters vorsichtig auf das Kieselgel ab. Man läßt langsam ohne Vakuum einziehen und legt erst dann ein leichtes Vakuum an, wenn der Inhalt des Scheidetrichters auf das Kieselgel aufgebracht ist. Die ersten 150-250 ml Filtrat sind dunkelgrau-grün und werden verworfen. Man spült den Scheidetrichter mit Hexan-Ethylacetat (2:3) gut aus und gibt dies auf das Kieselgel. Um sämtliches Produkt vom Kieselgel zu waschen, braucht man noch etwa 11 Hexan:Ethylacetat (2:3).

Ist das Filtrat nurmehr schwach blau gefärbt oder beginnt es schon, einen Grünstich zu bekommen, wird der Waschvorgang beendet, und das Lösungsmittel wird bis zur Trockne einrotiert.

Dann wird der Rückstand in Ethanol aufgenommen und in ein 11-Becherglas überführt (400-500 ml). Man gibt vorsichtig die gleiche Menge Wasser zu und läßt im offenen Becherglas auskristallisieren. Bei vollständiger Kristallisation ist das Lösungsmittel rostbraun gefärbt, und man kann abfiltrieren. Der Rückstand wird noch mehrmals mit Ethanol:Wasser (1:2) gewaschen, bis das Filtrat nahezu farblos ist. an läßt an der Luft und anschließend im Vakuum trocknen.

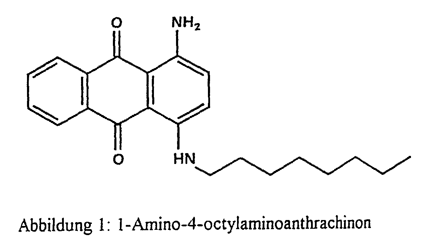

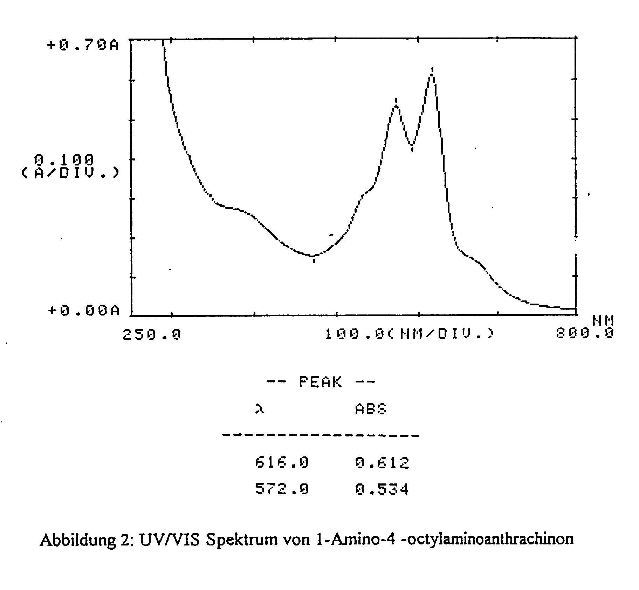

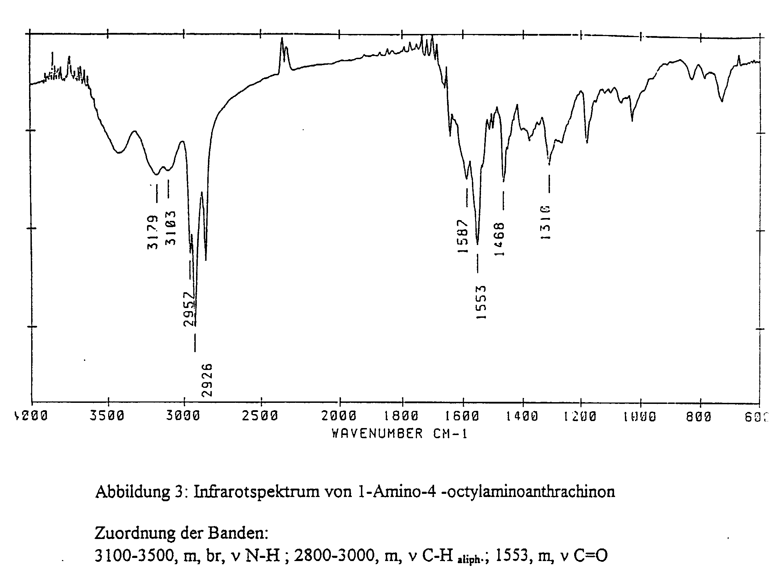

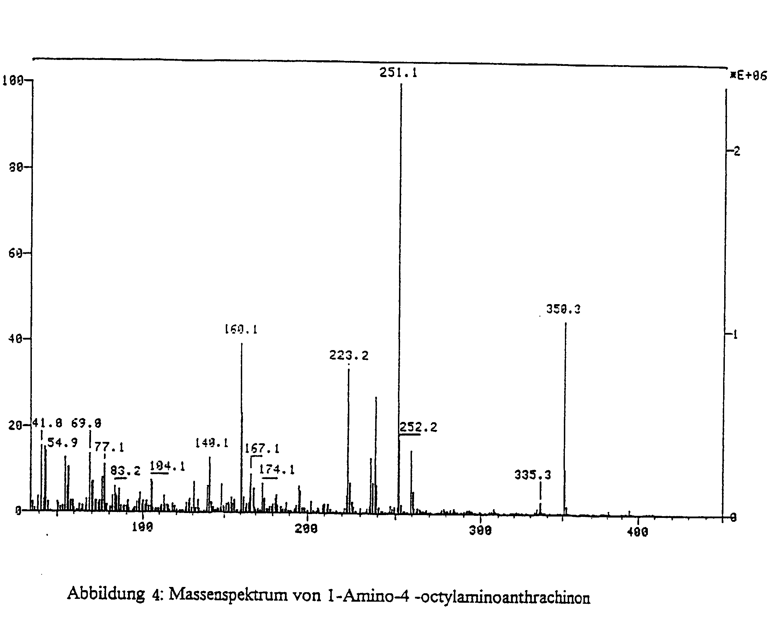

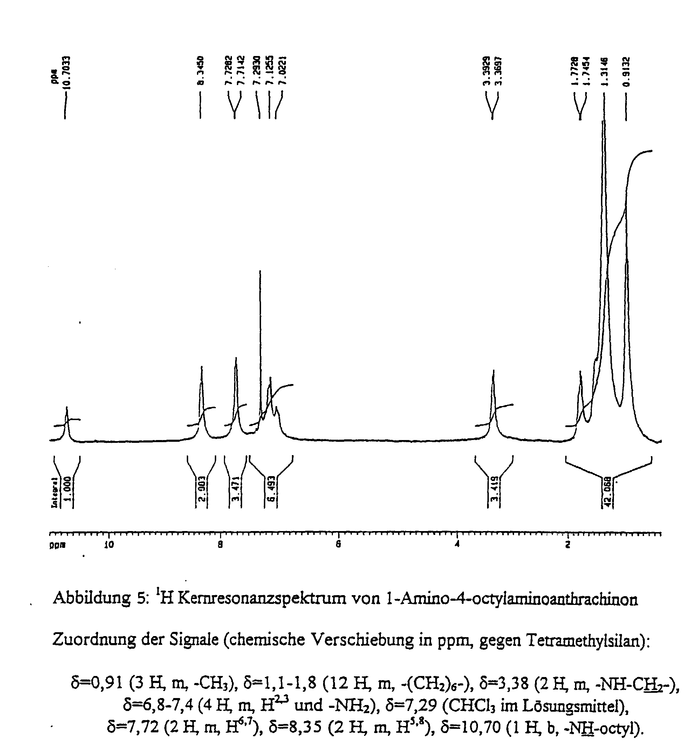

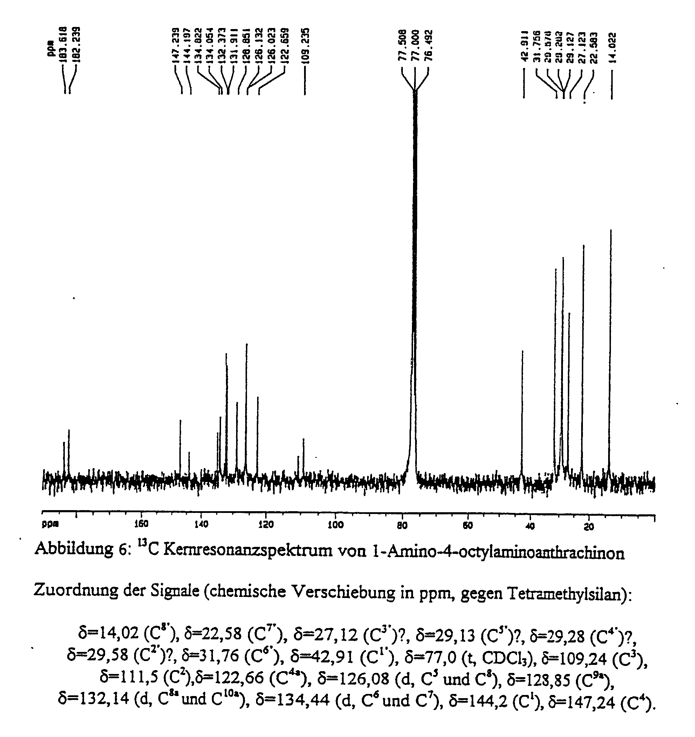

Die Struktur der Verbindung sowie die analytischen Daten lassen sich den beigefügten Spektren entnehmen. Dabei zeigt Abb. 1 die Strukturformel, Abb. 2 das UV/VIS-Spektrum, Abb. 3 das IR-Spektrum, Abb. 4 das Massenspektrum, Abb. 5 das $^1$H-NMR- und Abb. 6 das $^{13}$C-NMR-Spektrum von 1-Amino-(4-octyl-amino) anthrachinon.

## 2. Quantitative Bestimmung der Gesamthypericine

Die Gehaltsbestimmung der Gesamthypericine z.B. in einem Extrakt erfolgt hochleistungsflüssigchromatographisch (DAB 10, V6.20.4) nach der unten angegebenen Methode.

Untersuchungslösung:

100 mg des zu untersuchenden Johanniskrautextrakts werden auf 0,01 mg genau in einen 25-ml-Meßkolben eingewogen und mit 1,00 ml der Stammlösung 1 (s.u.) versetzt. Ca. 20 ml Methanol R/ Ethylacetat R (5:1 V/V) werden zugegeben und gut vermischt. Nach etwa 15 min im Ultraschallbad läßt man die Lösung abkühlen und füllt mit Methanol R/Ethylacetat R (5:1 V/V) bis zur Volumenmarke auf. Die so erhaltene Lösung wird durch einen 0,2 μm-Filter in ein HPLC-Probenvial filtriert und 2 Stunden bei 2000 Lux belichtet.

Stammlösung 1:

12,5 mg 1-Amino-4-(1-octylamino)anthrachinon werden in einen 25-ml-Meßkolben auf 0,01 mg genau eingewogen und mit Methanol bis zur Volumenmarke aufgefüllt. Zum vollständigen Lösen wird 15 min im Ultraschallbad behandelt.

Stammlösung 2:

6 mg Hypericin werden auf 0,01 mg genau in einen 100-ml-Meßkolben eingewogen und mit Methanol R/Ethylacetat R (5:1 V/V) bis zur Volumenmarke aufgefüllt. Zum vollständigen Lösen wird 15 min im Ultraschallbad behandelt.

Stammlösung 3:

6 mg Pseudohypericin werden auf 0,01 mg genau in einen 50-ml-Meßkolben eingewogen und mit Methanol R/ Ethylacetat R (5:1 V/V) bis zur Volumenmarke aufgefüllt. Zum vollständigen Lösen wird 15 min im Ultraschallbad behandelt.

Kalibrierlösungen:

Nach dem Abkühlen wird je 1,00 ml der Stammlösung 1, 2 und 3 in einen 25-ml-Meßkolben überführt und mit Methanol R/Ethyl-acetat R (5:1 V/V) bis zur Volumenmarke aufgefüllt.

Die HPLC-Analyse erfolgt unter folgenden Bedingungen:

Trennsystem:

| Säule | Multospher ODS, 250x3 mm, 5µm |
|---|---|
| Eluent | Methanol R - Ethylacetat R - Phosphatpuffer (480/117/124 V/V/V) Phosphatpuffer: 0,1 M NaH$_2$PO$_4$-Lösung, pH=2,1 (eingestellt mit Phosphorsäure 85 % R) |
| Flußrate | 0,6 ml/min |
| Injektionsvol. | 15 µl |
| Detektion | UV-Vis: 590 nm |
| Integration | Peakflächenbestimmung |
| Quantifizier. | interne Standardmethode Standard: Hypericin interner Standard: 1-Amino-4-(1-octylamino) anthrachinon |

Leitsubstanz:

Als Leitsubstanzen dienen Hypericin und Pseudohypericin. Für die Bestimmung des Gesamthypericingehalts werden die gefundenen Mengen an Hypericin und Pseudohypericin zugrundegelegt. Das eventuell noch vorhandene Cyclopseudohypericin wird nicht mit in die Berechnung einbezogen.

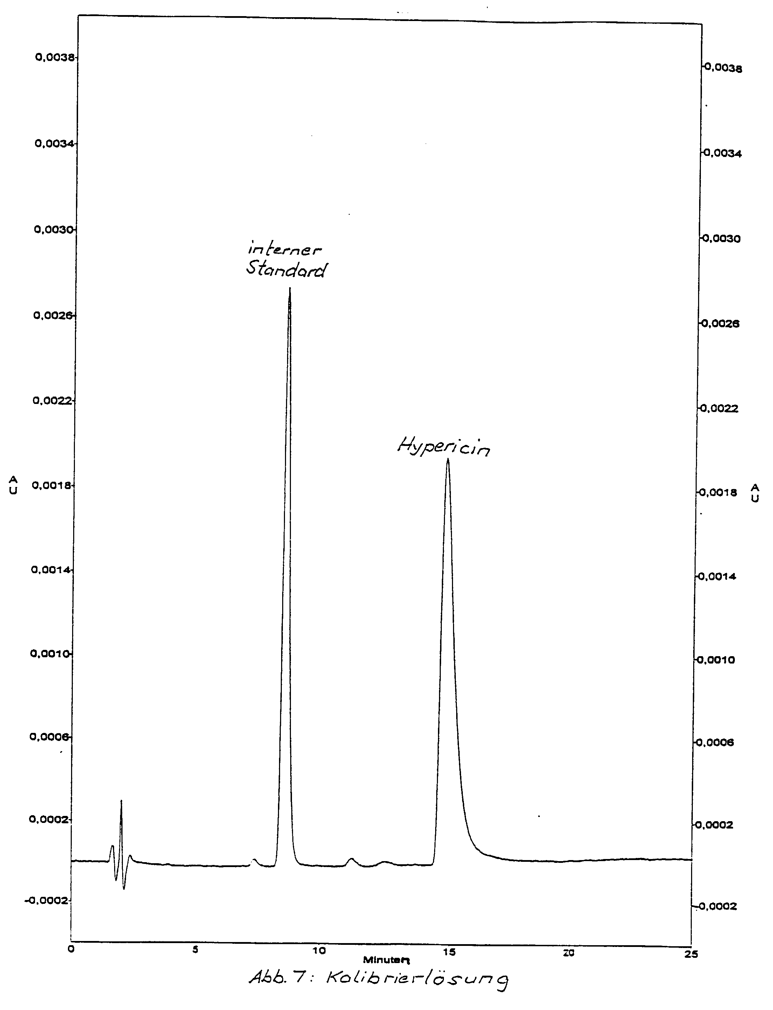

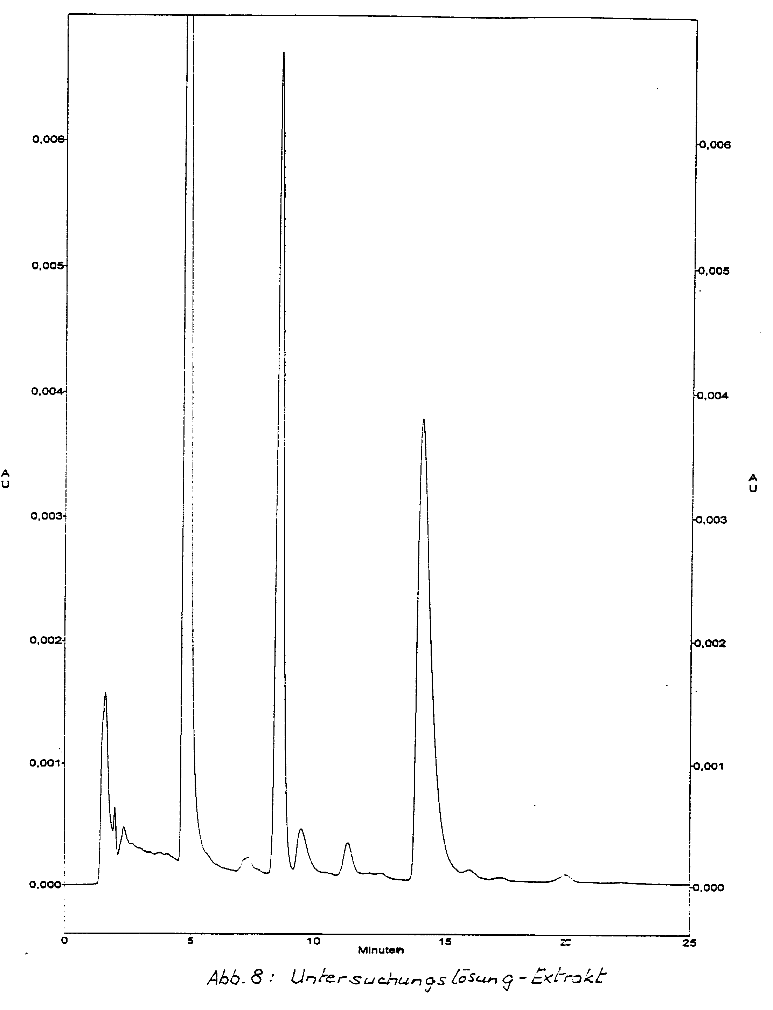

Beispielhafte Chromatogramme der Kalibrier- und der Untersuchungslösungen sind als Abb. 7 bzw. 8 beigefügt.

**3. Quantitative Bestimmung des Hyperforins und weiterer Inhaltsstoffe**

Die Gehaltsbestimmung der Gesamthypericine z.B. in einem Extrakt erfolgt hochleistungsflüssigchromatographisch (DAB 10, V6.20.4) nach der unten angegebenen Methode.

Untersuchungslösung:

100 mg des zu untersuchenden Johanniskrautextrakts werden auf 0,01 mg genau in einen 25-ml-Braunglas-Meßkolben eingewogen und mit 1,00 ml der Stammlösung 1 (s.u.) versetzt. Ca. 20 ml Methanol R werden zugegeben und gut vermischt. Nach etwa 15 min im Ultraschallbad läßt man die Lösung abkühlen und füllt mit Methanol R bis zur Volumenmarke auf. Die so erhaltene Lösung wird durch einen 0,2 µm-Filter in ein HPLC-Braunglas-Probenvial filtriert und ist ca. 1-2 Tage stabil.

Soll der Gesamthypericingehalt bestimmt werden, wird in ein Klarsicht-Probenvial filtriert und 2 Stunden bei 2000 Lux belichtet.

Stammlösung 1:

12,5 mg 1-Amino-4-(1-octylamino)anthrachinon werden in einen 25-ml-Meßkolben auf 0,01 mg genau eingewogen und mit Methanol bis zur Volumenmarke aufgefüllt. Zum vollständigen Lösen wird 15 min im Ultraschallbad behandelt.

Stammlösung 2:

6 mg Hypericin werden auf 0,01 mg genau in einen 100-ml-Meßkolben eingewogen und mit Methanol R/Ethylacetat R (5:1 V/V) bis zur Volumenmarke aufgefüllt. Zum vollständigen Lösen wird 15 min im Ultraschallbad behandelt.

Stammlösung 3:

6 mg Pseudohypericin werden auf 0,01 mg genau in einen 50-ml-Meßkolben eingewogen und mit Methanol R/Ethylacetat R (5:1 V/V) bis zur Volumenmarke aufgefüllt. Zum vollständigen Lösen wird 15 min im Ultraschallbad behandelt.

Stammlösung 4:

15 mg Rutosid werden auf 0,01 mg genau in einen 100-ml-Meßkolben eingewogen und mit Methanol R bis zur Volumenmarke aufgefüllt. Zum vollständigen Lösen wird 15 min im Ultraschallbad behandelt.

Stammlösung 5:

20 mg Hyperosid werden auf 0,01 mg genau in einen 100-ml-Meßkolben eingewogen und mit Methanol R bis zur Volumenmarke aufgefüllt. Zum vollständigen Lösen wird 15 min im Ultraschallbad behandelt.

Stammlösung 6:

10 mg Isoquercitrin werden auf 0,01 mg genau in einen 100-ml-Meßkolben eingewogen und mit Methanol R bis zur Volumenmarke aufgefüllt. Zum vollständigen Lösen wird 15 min im Ultraschallbad behandelt.

Stammlösung 7:

15 mg Quercitrin werden auf 0,01 mg genau in einen 100-ml-Meßkolben eingewogen und mit Methanol R bis zur Volumenmarke aufgefüllt. Zum vollständigen Lösen wird 15 min im Ultraschallbad behandelt.

Stammlösung 8:

15 mg Quercetin werden auf 0,01 mg genau in einen 100-ml-Meßkolben eingewogen und mit Methanol R bis zur Volumenmarke aufgefüllt. Zum vollständigen Lösen wird 15 min im Ultraschallbad behandelt.

Kalibrierlösung I:

Nach dem Abkühlen wird je 1,00 ml der Stammlösungen 1 bis 8 in einen 25-ml-Meßkolben überführt und mit Methanol R bis zur Volumenmarke aufgefüllt.

Kalibrierlösung II:

2,5 mg Hyperforin werden auf 0,01 mg genau in einen 25 ml-Braunglaskolben eingewogen, mit 1 ml der Stammlösung 1 versetzt und mit Methanol bis zur Volumenmarke aufgefüllt.
Die HPLC-Analyse erfolgt unter folgenden Bedingungen:

Trennsystem:

| Säule | Multospher ODS, 250x3 mm, 5µm |
|---|---|
| Eluent | A: 150 ml Acetonitril R/840 ml Wasser/10 ml 85 %ige Phosphorsäure |
| | B: 800 ml Acetonitril R/190 ml Wasser/10 ml 85 %ige Phosphorsäure |

Zeitprogramm:

| Zeit [min] | Konz. A [%] | Konz. B [%] | Fluß [ml/min] |
|---|---|---|---|
| 0 | 98 | 2 | 0,7 |
| 30 | 98 | 2 | 0,7 |
| 30-32 | | | 0,8 |
| 30-65 | 0 | 100 | 0,8 |
| 95 | 0 | 100 | 0,8 |

(fortgesetzt)

| Zeit [min] | Konz. A [%] | Konz. B [%] | Fluß [ml/min] |
|---|---|---|---|
| 95-97 | 98 | 2 | 0,8 |
| 115-116 | | | 0,7 |
| 120 | Stop | | |

| Injektionsvol. | 10 µl |
|---|---|
| Detektion | UV: 272 nm, Vis: 590 nm |
| Temperatur | 20°C |
| Integration | Peakflächenbestimmung |
| Quantifizier. | interne Standardmethode |
| | Standard: Hypericin, Pseudohypericin, |
| | Hyperforin u.a. |
| | interner Standard:1-Amino-4-(1- |
| | octylamino) anthrachinon |

Berechnung:

Der Gehalt an Hyperforinen und Flavonoiden läßt sich chargenspezifisch durch Integraton der Peakflächen der Referenzen in der Kalibirer- und Untersuchungslösung vor der Belichtung ermitteln.

Der Gehalt des Extraktes aus Johanniskrautblättern und Blüten an Gesamtypericin läßt sich chargenspezifisch durch Integration der Peakflächen von Hypericin und Pseudohypericin in der Untersuchungs- bzw. in der Referenzlösung ermitteln. Um ein eindeutiges Ergebnis zu erhalten, sollte die Probenlösung vor der Messung mit 2000 Lux 2 Stunden lang belichtet werden.

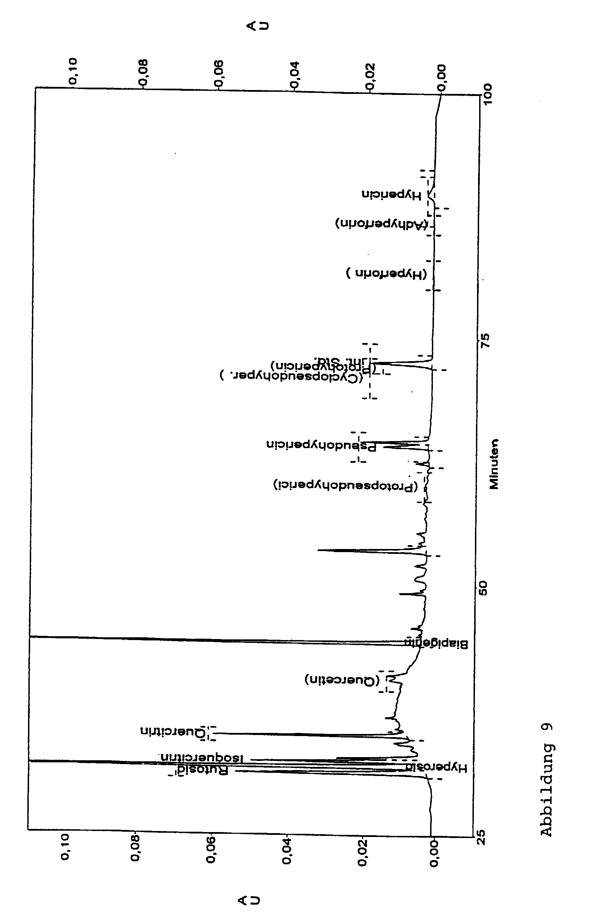

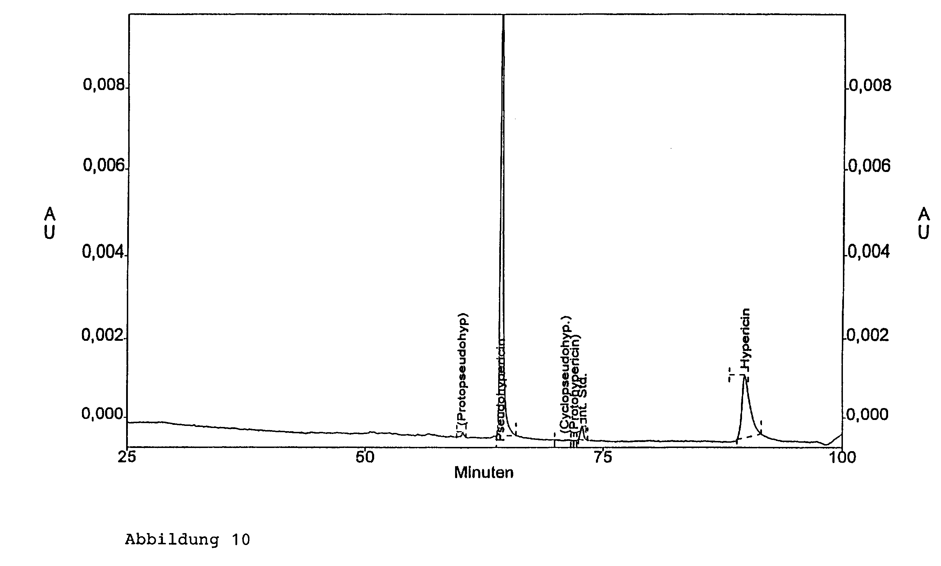

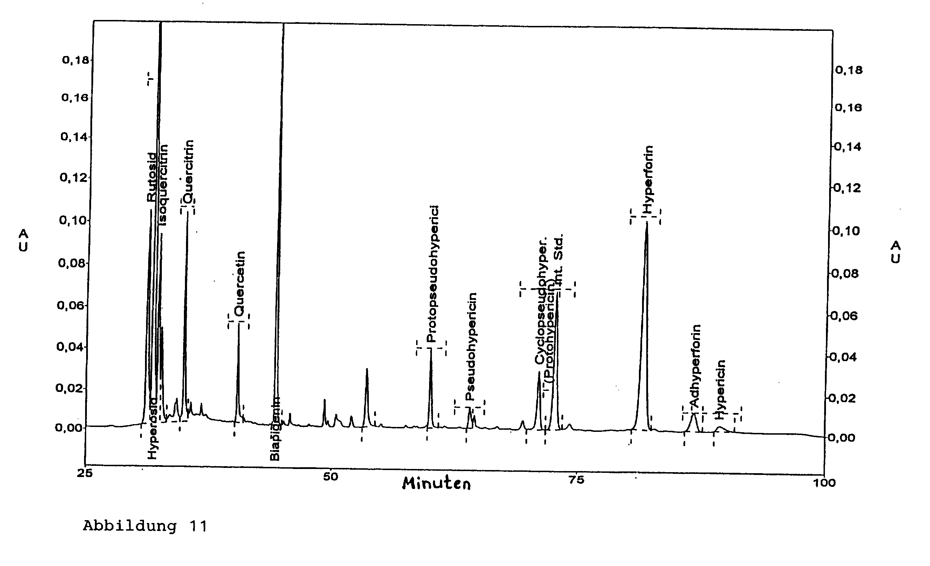

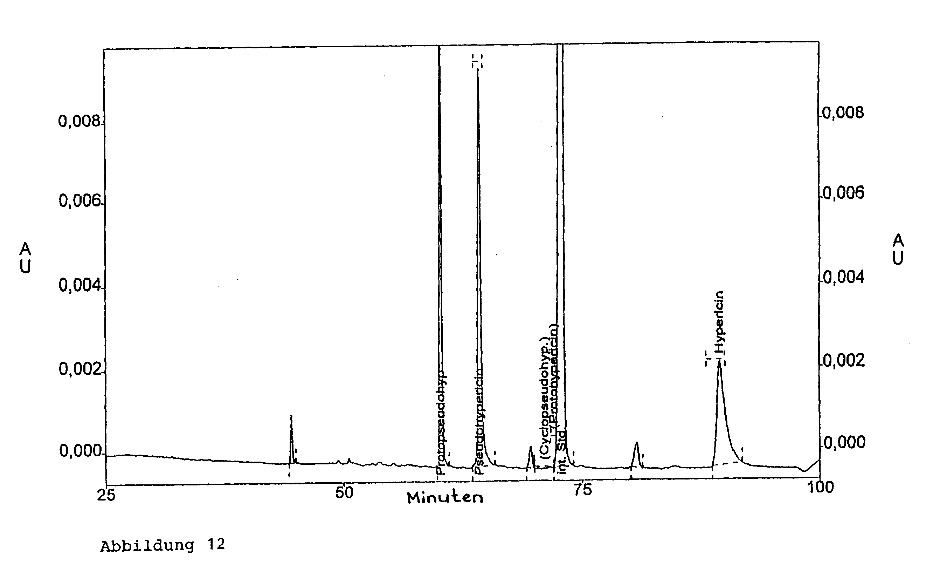

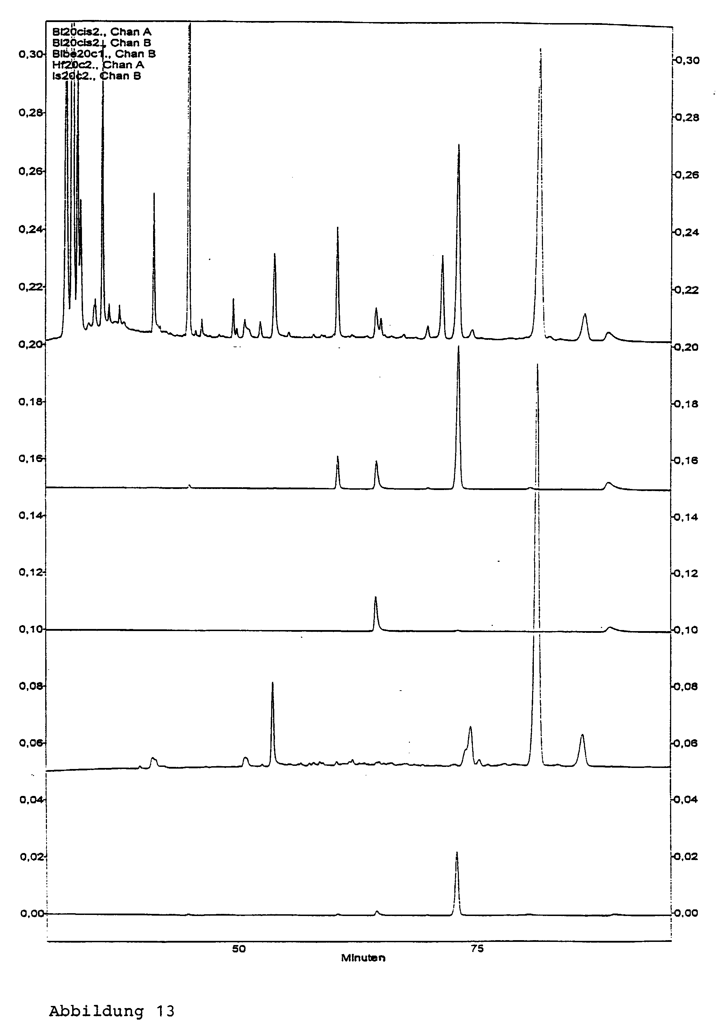

Beispielhafte Chromatogramme einer Untersuchungslösung bei 272 nm und 590 nm mit und ohne Belichtung sind als Abb. 9 und 10 bzw. 11 und 12 beigefügt. Abb. 13 zeigt zur Veranschaulichung übereinander die Chromatogramme von Johanniskrautextrakt mit internem Standard bei 272 nm (A), bei 590 nm (B), Johanniskrautextrakt nach Belichtung ohne internen Standard bei 590 nm (C), Hyperforin angereicherten Extrakt bei 272 nm (D) sowie den internen Standard bei 590 nm (E).

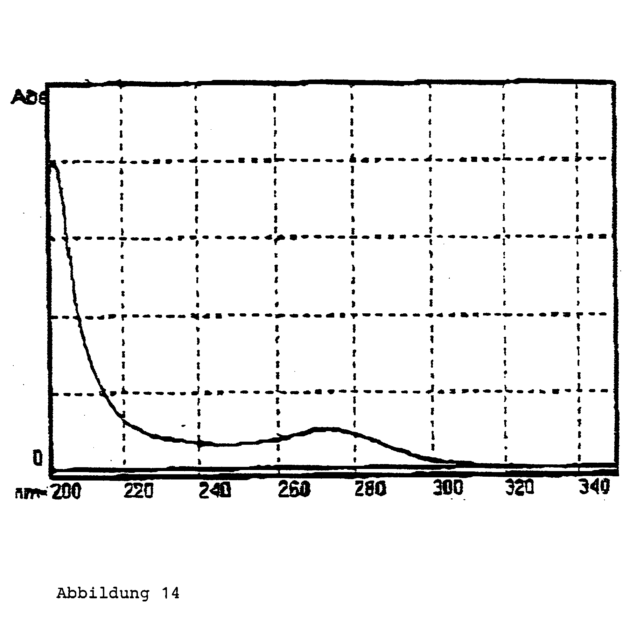

Fig. 14 ist schließlich ein DAD-Online-Spektrum einer Hyperforin-Referenzlösung.

**Patentansprüche**

1. Verfahren zur Bestimmung eines oder mehrerer Inhaltsstoffe(s) von Johanniskraut (Hypericum perforatum L.) mittels HPLC, **dadurch gekennzeichnet**, daß 1-Amino-4-(1-octylamino) anthrachinon als interner Standard verwendet wird.

2. Verfahren nach Anspruch 1, **dadurch gekennzeichnet**, daß das Johanniskraut in Form der Droge, als Drogenzubereitung, wie z.B. Extrakt, oder als daraus hergestelltes Fertigarzneimittel, vorzugsweise in Methanol oder einer Mischung aus Methanol und Ethylacetat, in Lösung gebracht wird.

3. Verfahren nach Anspruch 1 oder 2, **dadurch gekennzeichnet**, daß ein Gemisch aus Methanol und Ethylacetat oder ein Gemisch aus Acetonitril und Phosphorsäure als Eluent verwendet wird.

4. Verfahren nach Anspruch 3, **dadurch gekennzeichnet**, daß das Gemisch aus Methanol und Ethylacetat in einem Verhältnis von 5:1 V/V verwendet wird.

5. Verfahren nach einem der Ansprüche 1 bis 4, **dadurch gekennzeichnet**, daß die Bestimmung bei einer Temperatur zwischen 20 und 35°C durchgeführt wird.

6. Verfahren nach einem der Ansprüche 1 bis 5, **dadurch gekennzeichnet**, daß die Probe vor der Bestimmung einer Belichtung ausgesetzt wird.

7. Verfahren nach einem der Ansprüche 1 bis 5, **dadurch gekennzeichnet** , daß unter Lichtausschluß gearbeitet wird.

8. Verwendung von 1-Amino-4-(1-octylamino) anthrachinon zur Bestimmung eines oder mehrerer Inhaltsstoffe(s) von Johanniskraut (Hypericum perforatum L.).

Abbildung 1: 1-Amino-4-octylaminoanthrachinon

Abbildung 2: UV/VIS Spektrum von 1-Amino-4 -octylaminoanthrachinon

Abbildung 3: Infrarotspektrum von 1-Amino-4 -octylaminoanthrachinon

Zuordnung der Banden:
3100-3500, m, br, v N-H ; 2800-3000, m, v C-H aliph.; 1553, m, v C=O

Abbildung 4: Massenspektrum von 1-Amino-4 -octylaminoanthrachinon

Abbildung 5: $^1$H Kernresonanzspektrum von 1-Amino-4-octylaminoanthrachinon

Zuordnung der Signale (chemische Verschiebung in ppm, gegen Tetramethylsilan):

$\delta$=0,91 (3 H, m, -CH$_3$), $\delta$=1,1-1,8 (12 H, m, -(CH$_2$)$_6$-), $\delta$=3,38 (2 H, m, -NH-C$\underline{H}_2$-), $\delta$=6,8-7,4 (4 H, m, H$^{2,3}$ und -NH$_2$), $\delta$=7,29 (CHCl$_3$ im Lösungsmittel), $\delta$=7,72 (2 H, m, H$^{6,7}$), $\delta$=8,35 (2 H, m, H$^{5,8}$), $\delta$=10,70 (1 H, b, -N$\underline{H}$-octyl).

Abbildung 6: $^{13}$C Kernresonanzspektrum von 1-Amino-4-octylaminoanthrachinon

Zuordnung der Signale (chemische Verschiebung in ppm, gegen Tetramethylsilan):

$\delta$=14,02 (C$^{8'}$), $\delta$=22,58 (C$^{7'}$), $\delta$=27,12 (C$^{3'}$)?, $\delta$=29,13 (C$^{5'}$)?, $\delta$=29,28 (C$^{4'}$)?,
$\delta$=29,58 (C$^{2'}$)?, $\delta$=31,76 (C$^{6'}$), $\delta$=42,91 (C$^{1'}$), $\delta$=77,0 (t, CDCl$_3$), $\delta$=109,24 (C$^3$),
$\delta$=111,5 (C$^2$), $\delta$=122,66 (C$^{4a}$), $\delta$=126,08 (d, C$^5$ und C$^8$), $\delta$=128,85 (C$^{9a}$),
$\delta$=132,14 (d, C$^{8a}$ und C$^{10a}$), $\delta$=134,44 (d, C$^6$ und C$^7$), $\delta$=144,2 (C$^1$), $\delta$=147,24 (C$^4$).

*Abb. 7: Kalibrierlösung*

Abb. 8: Untersuchungslösung - Extrakt

Abbildung 9

Abbildung 10

Abbildung 11

Abbildung 12

Abbildung 13

22

Abbildung 14

Europäisches
Patentamt

**EUROPÄISCHER RECHERCHENBERICHT**

Nummer der Anmeldung

EP 98 25 0070

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | MICALI G ET AL: "High-performance liquid chromatographic determination of the biologically active principle hypericin in phytotherapeutic vegetable extracts and alcoholic beverages" JOURNAL OF CHROMATOGRAPHY A, Bd. 731, Nr. 1, 19.April 1996, Seite 336-339 XP004039286 * Zusammenfassung * --- | 1 | G01N30/62 G01N30/88 |
| A | J. HÖLZL ET AL.: "Johanniskraut (Hypericumperforatum L.)  HPLC-Analyse der wichtigsten Inhaltsstoffe und deren Variabilität in einer Population" DEUTSCHE APOTHEKER ZEITUNG, Bd. 127, Nr. 23, 4.Juni 1987, Seiten 1227-1230, XP002068705 * Seite 1229, Spalte 3, letzter Absatz – Seite 1230 * --- | 1,8 | |
| A | L. LIEBES ET AL.: "a method for the quantitation of hypericin, an antiviral agent, in biological fluids by high-performance liquid chromatography" ANALYTICAL BIOCHEMISTRY., Bd. 195, 1991, ORLANDO   US, Seiten 77-85, XP002068706 * Seite 79, Spalte 1, letzter Absatz – Spalte 2, Absatz 1 * --- | 1,8 | **RECHERCHIERTE SACHGEBIETE (Int.Cl.6)** G01N |
| A,D | PHARMAZEUTISCHE ZEITUNG WISSENSCHAFTSAUSGABE, Bd. 137, Nr. 5-5., 1992, ISSN 0935-5901, Seiten 202-207, XP002068707 * Seite 203 * ----- | 1,8 | |

Der vorliegende Recherchenbericht wurde für alle Patentansprüche erstellt

| Recherchenort | Abschlußdatum der Recherche | Prüfer |
|---|---|---|
| DEN HAAG | 19.Juni 1998 | Zinngrebe, U |